# EUROPÄISCHE PATENTANMELDUNG

(11) **EP 4 524 430 A1**
(43) Veröffentlichungstag der Anmeldung: **19.03.2025**
(21) Anmeldenummer: 24195735.6
(22) Anmeldetag: 21.08.2024
(51) Int. Cl.: F16H 57/02, F16H 61/00, F16H 63/34, B60K 1/00

(54) **ANTRIEBSEINHEIT MIT VERBESSERTER BLOCKIERUNG EINER DREHBEWEGUNG**

(30) Priorität: 13.09.2023 DE 102023124668
(71) Anmelder: Valeo eAutomotive Germany GmbH, 91056 Erlangen (DE)
(72) Erfinder: Meding, Christian, 91056 Erlangen (DE)
(74) Vertreter: Valeo Powertrain Systems

(57) **Zusammenfassung**

Es wird eine Antriebseinheit (1, 1a, 1b) angegeben, welche einen Getriebemotor (2), einen Elektromotor (3) und ein Getriebe (4) umfasst. Weiterhin umfasst der Getriebemotor (2) ein Getriebemotorgehäuse (7a, 7b), in dem der Elektromotor (3) und das an den Elektromotor (3) angekoppelte Getriebe (4) zur Abgabe einer Drehbewegung angeordnet sind. Zudem umfasst der Getriebemotor (2) eine mit dem Elektromotor (3) elektrisch verbundene Motorsteuerung (18) mit einem Steuerungsgehäuse (19a, 19b), das mechanisch direkt mit dem Getriebemotorgehäuse (7a, 7b) verbunden ist, sowie eine Blockiereinrichtung (20a, 20b) mit einem Aktuator (21a, 21b) und einem Blockierelement (22a, 22b). Das Blockierelement (22a, 22b) ist vom Aktuator (21a, 21b) in eine Blockierstellung und eine Freigabestellung bewegbar, wobei das Blockierelement (22a, 22b) die Drehbewegung in der Blockierstellung mechanisch blockiert und in der Freigabestellung zulässt. Der Aktuator (21a, 21b) ist dabei im Steuerungsgehäuse (19a, 19b) angeordnet. Weiterhin wird ein Fahrzeug (32) mit einer solchen Antriebseinheit (1, 1a, 1b) angegeben.

## Beschreibung

### TECHNISCHES GEBIET

Die Erfindung betrifft eine Antriebseinheit, welche einen Getriebemotor mit einem Getriebemotorgehäuse umfasst, in dem ein Elektromotor und ein an den Elektromotor angekoppeltes Getriebe der Antriebseinheit zur Abgabe einer Drehbewegung (an einer Abtriebswelle des Getriebes) angeordnet sind. Weiterhin umfasst die Antriebseinheit eine mit dem Elektromotor elektrisch verbundene Motorsteuerung mit einem Steuerungsgehäuse, das mechanisch direkt mit dem Getriebemotorgehäuse verbunden ist, sowie eine Blockiereinrichtung mit einem Aktuator und einem Blockierelement, das vom Aktuator in eine Blockierstellung und eine Freigabestellung bewegbar ist, wobei das Blockierelement die Drehbewegung in der Blockierstellung mechanisch blockiert und in der Freigabestellung zulässt. Weiterhin betrifft die Erfindung ein Fahrzeug mit einer solchen Antriebseinheit, die zum Antreiben des Fahrzeugs vorgesehen ist.

### STAND DER TECHNIK

Eine Antriebseinheit und ein Fahrzeug der jeweils genannten Art sind aus dem Stand der Technik grundsätzlich bekannt. Problematisch an den bekannten Lösungen ist, dass sie wenig Schutz vor Umwelteinflüssen und vor allem wenig Schutz gegen unerwünschte Manipulation der Blockiereinrichtung bieten. Für Autodiebe stellt eine mechanische Blockierung einer Antriebseinheit grundsätzlich ein Problem dar, jedoch sind bekannte Lösungen leicht angreifbar, wodurch eine Blockierung unbefugt aufgehoben werden kann.

### OFFENBARUNG DER ERFINDUNG

Eine Aufgabe der Erfindung ist es daher, eine verbesserte Antriebseinheit und ein verbessertes Fahrzeug anzugeben. Insbesondere soll die Blockiereinrichtung besser vor Umwelteinflüssen und vor allem besser vor unerwünschter Manipulation geschützt werden.

Die Aufgabe der Erfindung wird mit einer Antriebseinheit der eingangs genannten Art gelöst, bei welcher der Aktuator im Steuerungsgehäuse angeordnet ist (insbesondere vollständig im Steuerungsgehäuse angeordnet ist).

Die Aufgabe der Erfindung wird auch durch ein Fahrzeug mit einer solchen Antriebseinheit gelöst, die zum Antreiben des Fahrzeugs vorgesehen ist. Insbesondere ist die Blockiereinrichtung dabei Teil einer Parksperre für das Fahrzeug.

Durch die vorgeschlagenen Maßnahmen ist die Blockiereinrichtung besser vor Umwelteinflüssen und vor allem besser vor unerwünschter Manipulation geschützt, da die Blockiereinrichtung im Steuerungsgehäuse angeordnet ist. Beispielsweise kann das Steuerungsgehäuse aus Metall bestehen, wodurch dieser Schutz besonders wirksam ist, da ein solches Gehäuse sowohl mechanisch schwer geöffnet werden kann als auch eine Manipulation durch elektromagnetische Wellen unmöglich ist oder wenigstens deutlich erschwert wird.

Grundsätzlich kann die direkte mechanische Verbindung des Steuerungsgehäuses mit dem Getriebemotorgehäuse oder dem Getriebegehäuse den Fall einschließen, dass beide Gehäuse nur durch eine Dichtung voneinander getrennt sind.

Weitere vorteilhafte Ausgestaltungen und Weiterbildungen der Erfindung ergeben sich aus den Unteransprüchen sowie aus der Beschreibung in Zusammenschau mit den Figuren.

Günstig ist es, wenn das Getriebemotorgehäuse mehrteilig aufgebaut ist und ein Motorgehäuse sowie ein Getriebegehäuse umfasst, wobei das Steuerungsgehäuse mechanisch direkt mit dem Getriebegehäuse verbunden ist. Da das Getriebegehäuse in der Regel vergleichsweise stabil ist, wird einer Manipulation der Blockiereinrichtung besonders gut vorgebeugt. Insbesondere kann bei einer solchen Lösung das Getriebe selbst durch das Blockierelement mechanisch blockiert werden.

Optional kann das Getriebegehäuse mit dem Steuerungsgehäuse einstückig ausgebildet sein. In diesem Fall kann das Innere des Steuerungsgehäuses durch eine mit einem Deckel verschließbare Öffnung des Steuerungsgehäuses zugänglich sein.

Günstig ist es weiterhin, wenn das Steuerungsgehäuse schalenförmig oder topfförmig ausgebildet ist und ein Innenraum des Steuerungsgehäuses (neben dem Steuerungsgehäuse selbst) vom Getriebemotorgehäuse begrenzt ist. Dadurch ist das Steuerungsgehäuse leicht herstellbar (etwa durch Tiefziehen), bietet aber dennoch guten Schutz.

In einer Ausführungsvariante ist der Aktuator mit einer Steuerschaltung elektrisch steuerbar, die auf einer Leiterplatte im Steuerungsgehäuse angeordnet ist. Dadurch kann der Aktuator sehr flexibel angesteuert werden. Bei dem Aktuator kann es sich generell beispielsweise um einen elektrischen, pneumatischen oder hydraulischen Aktuator handeln.

In einer weiteren Ausführungsvariante kann der Aktuator über ein Aktuatorkabel und/oder einen Steckverbinder mit der Leiterplatte elektrisch verbunden sein. Denkbar ist aber auch, dass der Aktuator selbst auf der Leiterplatte angeordnet ist. Das Aktuatorkabel respektive die elektrische Verbindung zum Aktuator kann beispielsweise Steuerleitungen und/oder Messleitungen für den Aktuator aufweisen. Wenn der Aktuator als elektrischer Aktuator ausgebildet ist, kann das Aktuatorkabel insbesondere auch der Energieversorgung des Aktuators dienen.

Das Aktuatorkabel kann insbesondere ausschließlich im Inneren des Steuerungsgehäuses verlaufen. Dadurch kann eine Energieversorgung und/oder Steuerung des Aktuators besonders schwer manipuliert werden. Bei bekannten Lösungen ist es häufig ausreichend, den Aktuator über ein frei zugängliches Kabel mit elektrischer Spannung zu versorgen, um eine Blockierung unbefugt aufzuheben. Dies ist bei den oben vorgeschlagenen Lösungen nicht möglich.

Der Verlauf des Aktuatorkabels ausschließlich im Inneren des Steuerungsgehäuses hat außerdem den Vorteil, dass sich das Aktuatorkabel in einer geschützten Umgebung befindet und daher vergleichsweise einfach ausgebildet sein kann, insbesondere hinsichtlich seiner Isolierung. Das ermöglicht eine Kostenreduktion bezüglich einem herkömmlichen außerhalb des Steuerungsgehäuses verlaufenden Aktuatorkabel.

In einer weiteren Ausführungsvariante umfasst die Motorsteuerung einen mit dem Elektromotor elektrisch verbundenen Wechselrichter, welcher auf der Leiterplatte angeordnet ist. Dadurch sind die elektronischen Komponenten zum Antreiben des Elektromotors und zum Blockieren der Antriebseinheit auf einer Leiterplatte vereint, wodurch sowohl die Ansteuerung und Energieversorgung des Elektromotors als auch die Ansteuerung und gegebenenfalls Energieversorgung des Aktuators auf besonders einfache Weise möglich sind. Gleichzeitig sind die diese Komponenten im Steuerungsgehäuse gut vor äußeren Einflüssen und gegen Manipulation geschützt.

Günstig ist es, wenn ein Innenraum des Steuerungsgehäuses gegenüber einem Innenraum des Getriebemotorgehäuses abgedichtet ist. Insbesondere ist dies dann von Vorteil, wenn das Blockierelement aus dem Innenraum des Steuerungsgehäuses in den Innenraum des Getriebemotorgehäuses ragt. Dadurch wird vermieden, dass Schmierstoffe und/oder Kühlflüssigkeit in das Steuerungsgehäuse gelangen und dort Schaden anrichten.

Vorteilhaft ist es weiterhin, wenn das Steuerungsgehäuse eine Wölbung nach Innen aufweist und das Blockierelement aus dem Getriebemotorgehäuse oder einem Innenraum des Getriebemotorgehäuses in die Wölbung ragt. Das ermöglicht, dass das Blockierelement vom Aktuator berührungslos (beispielsweise induktiv) angetrieben wird. Eine Dichtung zwischen dem Steuerungsgehäuse und dem Getriebemotorgehäuse kann dann entfallen.

### KURZE BESCHREIBUNG DER FIGUREN

Ausführungsbeispiele der Erfindung sind exemplarisch in den beigefügten schematischen Figuren dargestellt. Es zeigen:
- Fig. 1: ein erstes schematisch im Halbschnitt dargestelltes Beispiel einer Antriebseinheit;
- Fig. 2: ein zweites schematisch im Halbschnitt dargestelltes Beispiel einer Antriebseinheit und
- Fig. 3: ein beispielhaftes Fahrzeug mit einer elektrischen Maschine der vorgeschlagenen Art.

### DETAILIERTE BESCHREIBUNG DER ERFINDUNG

Einführend wird festgehalten, dass gleiche Teile in den unterschiedlichen Ausführungsformen mit gleichen Bezugszeichen beziehungsweise gleichen Bauteilbezeichnungen versehen sind, gegebenenfalls mit unterschiedlichen Indizes. Die in der Beschreibung enthaltene Offenbarung eines Bauteils kann sinngemäß auf ein anderes Bauteil mit gleichem Bezugszeichen beziehungsweise gleicher Bauteilbezeichnung übertragen werden. Auch sind die in der Beschreibung gewählten Lageangaben, wie zum Beispiel "oben", "unten", "hinten", "vorne", "seitlich" und so weiter auf die unmittelbar beschriebene sowie dargestellte Figur bezogen und bei einer Lageänderung sinngemäß auf die neue Lage zu übertragen.

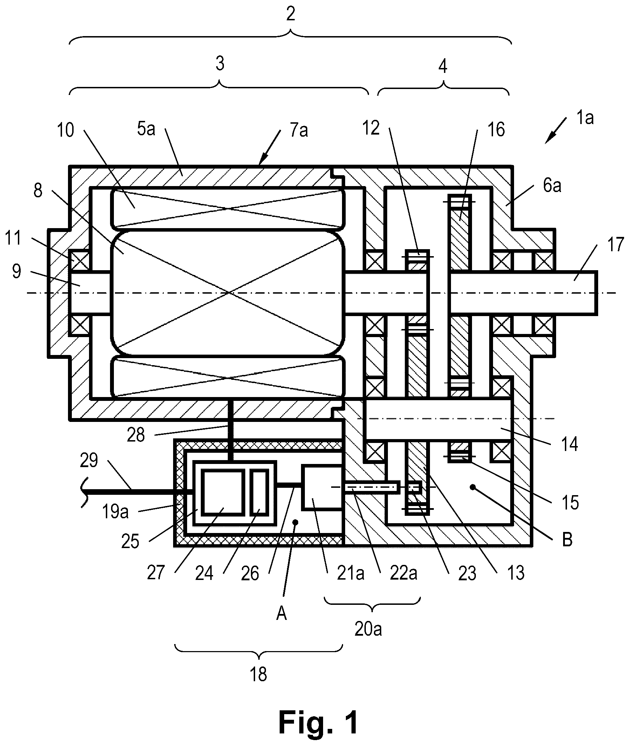

Die Figur 1 zeigt eine schematisch dargestellte Antriebseinheit 1a im Halbschnitt. Die Antriebseinheit 1a umfasst einen Getriebemotor 2 mit einem Elektromotor 3 und einem daran angekoppelten Getriebe 4. Der Elektromotor 3 umfasst ein Motorgehäuse 5a, und das Getriebe 4 umfasst ein Getriebegehäuse 6a, wobei das Motorgehäuse 5a und das Getriebegehäuse 6a gemeinsam das mehrteilig aufgebaute Getriebemotorgehäuse 7a bilden oder wenigstens von diesem umfasst sind. Der Elektromotor 3 umfasst weiterhin einen Rotor 8, welcher auf einer Rotorwelle 9 montiert ist. Zudem umfasst der Elektromotor 3 einen im Motorgehäuse 5a eingesetzten Stator 10. Die Rotorwelle 9 ist mit mehreren Lagern 11 drehbar im Getriebemotorgehäuse 7a gelagert.

Das Getriebe 4 umfasst ein Ritzel 12, das in diesem Beispiel auf der Rotorwelle 9 montiert ist. Es könnte aber auch auf einer gesonderten Welle montiert sein. Das Ritzel 12 steht im Eingriff mit einem auf einer Zwischenwelle 14 montierten Zahnrad 13. Auf der Zwischenwelle 14 ist ein weiteres Ritzel 15 montiert, das im Eingriff mit einem Zahnrad 16 steht, das auf einer Ausgangswelle 17 der Antriebseinheit 1a montiert ist. Eine Drehbewegung des Rotors 8 wird auf diese Weise an die Ausgangswelle 17 übertragen, jedoch mit geänderter Drehzahl. Der Aufbau des Getriebes 4 ist rein beispielhaft, und das Getriebe könnte auch anders ausgebildet sein.

Weiterhin umfasst die Antriebseinheit 1a eine mit dem Elektromotor 3 elektrisch verbundene Motorsteuerung 18, welche in einem Steuerungsgehäuse 19a angeordnet ist, das mechanisch direkt mit dem Getriebemotorgehäuse 7a verbunden ist. Darüber hinaus umfasst die Antriebseinheit 1a eine Blockiereinrichtung 20a mit einem Aktuator 21a und einem Blockierelement 22a, das vom Aktuator 21a in eine Blockierstellung und eine Freigabestellung bewegbar ist. Die Drehbewegung wird vom Blockierelement 22a, 22b in der Blockierstellung mechanisch blockiert und in der Freigabestellung zugelassen. In diesem Beispiel greift das Blockierelement 22a in der Blockierstellung in eine Ausnehmung 23 des Zahnrads 13 ein.

Diese Ausführungsform dient aber lediglich der Illustration der Vorgänge beim Blockieren und ist nicht einschränkend zu verstehen. Das Blockierelement 22a kann beispielsweise auch eines der Ritzel 12 oder 15 sowie das Zahnrad 16 oder direkt die Rotorwelle 9, die Zwischenwelle 14 oder die Ausgangswelle 17 blockieren. Wie aus der Fig. 1 erkennbar ist, ist der Aktuator 21a (insbesondere vollständig) im Steuerungsgehäuse 19a angeordnet. Der Aktuator 21a kann beispielsweise als elektrischer, pneumatischer oder hydraulischer Aktuator ausgebildet sein.

Die Antriebseinheit 1a umfasst weiterhin eine Steuerschaltung 24, die in diesem Beispiel auf einer Leiterplatte 25 im Steuerungsgehäuse 19a angeordnet ist und die zur elektrischen (An)steuerung des Aktuators 21a dient. Zu diesem Zweck sind die Steuerschaltung 24 und der Aktuator 21a über ein Aktuatorkabel 26 elektrisch verbunden. Denkbar wäre alternativ auch, dass der Aktuator 21a über einen Steckverbinder direkt mit der Leiterplatte 25 beziehungsweise mit der darauf angeordneten Steuerschaltung 24 elektrisch verbunden ist. Denkbar ist weiterhin, dass der Aktuator 21a überhaupt (direkt) auf der Leiterplatte 25 angeordnet ist.

Das Aktuatorkabel 26 respektive die elektrische Verbindung zum Aktuator 21a kann beispielsweise Steuerleitungen und/oder Messleitungen für den Aktuator 21a aufweisen. Wenn der Aktuator 21a als elektrischer Aktuator ausgebildet ist, kann das Aktuatorkabel 26 insbesondere auch der Energieversorgung des Aktuators 21a dienen Das Aktuatorkabel 21a kann insbesondere ausschließlich innerhalb des Steuerungsgehäuses 19a verlaufen, so wie das in der Fig. 1 der Fall ist.

Weiterhin umfasst die Antriebseinheit 1a beziehungsweise deren Motorsteuerung 18 einen Wechselrichter 27, welcher in diesem Beispiel ebenfalls auf der Leiterplatte 25 angeordnet ist und welcher über ein Motorkabel 28 mit dem Elektromotor 3 elektrisch verbunden ist. Schließlich umfasst die Antriebseinheit 1a ein Anschlusskabel 29, das mit der Motorsteuerung 18 elektrisch verbunden ist und zur elektrischen Anbindung derselben an eine Spannungsquelle und/oder an eine übergeordnete Steuerung dient.

Das Steuerungsgehäuse 19a kann insbesondere aus Metall bestehen, wodurch die darin enthaltenen Komponenten besonders gut vor Umwelteinflüssen und besonders gut vor Manipulation geschützt sind. Insbesondere kann das Anschlusskabel 29 das einzige Kabel sein, das aus dem Steuerungsgehäuse 19a herausführt.

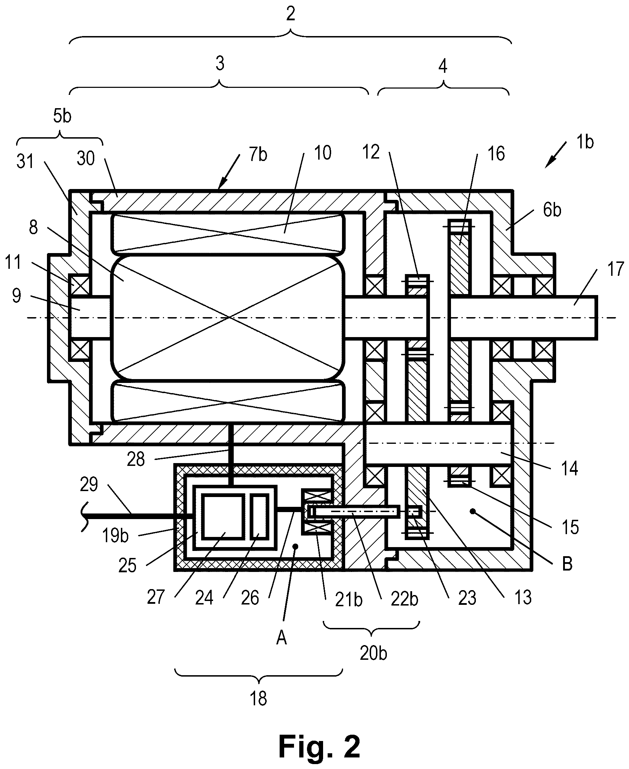

Fig. 2 zeigt nun eine Antriebseinheit 1b, welche der in Fig. 1 dargestellten Antriebseinheit 1a sehr ähnlich ist, jedoch auch einige Unterschiede aufweist. In dem in Fig. 1 dargestellten Beispiel ist das Steuerungsgehäuse 19a schalenförmig ausgebildet, wobei ein Innenraum A des Steuerungsgehäuses 19a vom Steuerungsgehäuse 19a selbst und vom Getriebemotorgehäuse 7a begrenzt ist, wohingegen der Innenraum A des Steuerungsgehäuses 19b der Antriebseinheit 1b vom Steuerungsgehäuse 19a vollständig umschlossen wird.

Ein weiterer Unterschied besteht hinsichtlich des Blockierelements 22b. Bei der Antriebseinheit 1a ragt das Blockierelement 22a aus dem Innenraum A des Steuerungsgehäuses 19a in den Innenraum B des Getriebemotorgehäuses 7a. Dagegen ist das Blockierelement 22b bei der Antriebseinheit 1b im Innenraum B des Getriebemotorgehäuses 7b angeordnet, ohne in den Innenraum A des Steuerungsgehäuses 19b hineinzuragen. Stattdessen weist der Innenraum A des Steuerungsgehäuses 19b eine Wölbung nach Innen auf, in die das Blockierelement 22b hineinragt. Dagegen ist der Aktuator 21 im Steuerungsgehäuses 19b angeordnet und treibt das Blockierelement 22b berührungslos (zum Beispiel induktiv) an. Dadurch ist keine Öffnung nötig, welche die beiden Innenräume A, B verbindet und durch welche das Blockierelement 22b geführt wäre. Dadurch kann eine gesonderte Abdichtung zwischen dem Innenraum A des Steuerungsgehäuses 19a und dem Innenraum B des Getriebemotorgehäuses 7a, so wie sie für die Antriebseinheit 1a vorgesehen sein kann, bei der Antriebseinheit 1b entfallen.

Als weiterer Unterschied ist schließlich das Motorgehäuse 5b bei der Antriebseinheit 1b zweiteilig aufgebaut und umfasst das Statorgehäuse 30 sowie das Lagerschild 31.

Bei den in den Fig. 1 und 2 dargestellten Ausführungsformen blockiert das Blockierelement 22a, 22b in der Blockierstellung das Getriebe 4. Denkbar wäre aber auch, dass das Steuerungsgehäuse 19a, 19b mechanisch nicht mit dem Getriebegehäuse 6a, 6b, sondern mit dem Motorgehäuse 5a, 5b verbunden ist und das Blockierelement 22a, 22b in der Blockierstellung den Elektromotor 3 mechanisch blockiert, etwa dessen Rotorwelle 9. Vorteilhaft wirken im Elektromotor 3 geringere Drehmomente, wodurch auch das Blockierelement 22a, 22b weniger stabil ausgeführt sein muss.

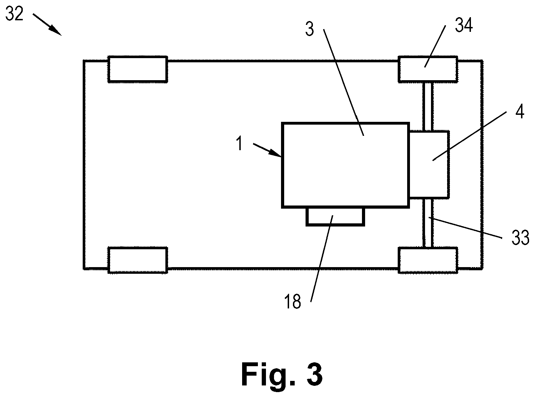

Die Fig. 3 zeigt schließlich die in ein Fahrzeug 32 eingebaute elektrische Antriebseinheit 1. Das Fahrzeug 32 weist zwei Achsen auf, von denen eine angetrieben ist. Konkret ist die Antriebseinheit 1 über die Halbachsen 33 der Hinterachse oder Vorderachse mit den Rädern 34 verbunden. Der Antrieb des Fahrzeugs 32 erfolgt zumindest teilweise oder zeitweise durch die elektrische Maschine 3. Das heißt, die elektrische Maschine 3 kann zum alleinigen Antrieb des Fahrzeugs 32 dienen oder zum Beispiel im Verbund mit einer Verbrennungskraftmaschine vorgesehen sein (Hybridantrieb).

Die Blockiereinrichtung 20a, 20b kann insbesondere Teil einer Parksperre für das Fahrzeug 32 sein. Beispielsweise kann eine Fahrzeugsteuerung (nicht dargestellt) über das Anschlusskabel 29 mit der Motorsteuerung 18 verbunden sein und neben Fahrbefehlen für den Wechselrichter 27 auch Steuerbefehle an die Steuerschaltung 24 des Aktuators 22a, 22b senden und so das Blockierelement 22a, 22b beim Parken des Fahrzeugs 32 in die Blockierstellung bringen.

Abschließend wird festgehalten, dass der Schutzbereich durch die Patentansprüche bestimmt ist. Die Beschreibung und die Zeichnungen sind jedoch zur Auslegung der Ansprüche heranzuziehen. Die in den Figuren enthaltenen Merkmale können beliebig ausgetauscht und miteinander kombiniert werden. Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenliste

- 1, 1a, 1b: Antriebseinheit
- 2: Getriebemotor
- 3: Elektromotor
- 4: Getriebe
- 5a, 5b: Motorgehäuse

- 6a, 6b: Getriebegehäuse
- 7a, 7b: Getriebemotorgehäuse
- 8: Rotor
- 9: Rotorwelle
- 10: Stator

- 11: Lager
- 12: Ritzel
- 13: Zahnrad
- 14: Zwischenwelle
- 15: Ritzel

- 16: Zahnrad
- 17: Ausgangswelle
- 18: Motorsteuerung
- 19a, 19b: Steuerungsgehäuse
- 20a, 20b: Blockiereinrichtung

- 21a, 21b: Aktuator
- 22a, 22b: Blockierelement
- 23: Ausnehmung
- 24: Steuerschaltung
- 25: Leiterplatte
- 26: Aktuatorkabel
- 27: Wechselrichter
- 28: Motorkabel
- 29: Anschlusskabel

- 30: Statorgehäuse
- 31: Lagerschild
- 32: Fahrzeug
- 33: Halbachse
- 34: Rad

- A: Innenraum Steuerungsgehäuse
- B: Innenraum Getriebemotorgehäuse

## Patentansprüche

1. Antriebseinheit (1, 1a, 1b), umfassend
- einen Getriebemotor (2) mit einem Getriebemotorgehäuse (7a, 7b), in dem ein Elektromotor (3) und ein an den Elektromotor (3) angekoppeltes Getriebe (4) zur Abgabe einer Drehbewegung angeordnet sind,
- eine mit dem Elektromotor (3) elektrisch verbundene Motorsteuerung (18) mit einem Steuerungsgehäuse (19a, 19b), das mechanisch direkt mit dem Getriebemotorgehäuse (7a, 7b) verbunden ist, und
- eine Blockiereinrichtung (20a, 20b) mit einem Aktuator (21a, 21b) und einem Blockierelement (22a, 22b), das vom Aktuator (21a, 21b) in eine Blockierstellung und eine Freigabestellung bewegbar ist, wobei das Blockierelement (22a, 22b) die Drehbewegung in der Blockierstellung mechanisch blockiert und in der Freigabestellung zulässt,
**dadurch gekennzeichnet, dass**
- der Aktuator (21a, 21b) im Steuerungsgehäuse (19a, 19b) angeordnet ist.

2. Antriebseinheit (1, 1a, 1b) nach Anspruch 1, **dadurch gekennzeichnet, dass** das Getriebemotorgehäuse (7a, 7b) mehrteilig aufgebaut ist und ein Motorgehäuse (5a, 5b) sowie ein Getriebegehäuse (6a, 6b) umfasst, wobei das Steuerungsgehäuse (19a, 19b) mechanisch direkt mit dem Getriebegehäuse (6a, 6b) verbunden ist.

3. Antriebseinheit (1, 1a, 1b) nach Anspruch 1 oder 2, **dadurch gekennzeichnet, dass** das Steuerungsgehäuse (19a, 19b) schalenförmig oder topfförmig ausgebildet ist und ein Innenraum (A) des Steuerungsgehäuses (19a, 19b) vom Getriebemotorgehäuse (7a, 7b) begrenzt ist.

4. Antriebseinheit (1, 1a, 1b) nach einem der vorhergehenden Ansprüche, **dadurch gekennzeichnet, dass** der Aktuator (21a, 21b) mit einer Steuerschaltung (24) elektrisch steuerbar ist, die auf einer Leiterplatte (25) im Steuerungsgehäuse (19a, 19b) angeordnet ist.

5. Antriebseinheit (1, 1a, 1b) nach Anspruch 4, **dadurch gekennzeichnet, dass** der Aktuator (21a, 21b) über ein Aktuatorkabel (26) und/oder einen Steckverbinder mit der Leiterplatte (25) elektrisch verbunden ist.

6. Antriebseinheit (1, 1a, 1b) nach Anspruch 4, **dadurch gekennzeichnet, dass** der Aktuator (21a, 21b) auf der Leiterplatte (25) angeordnet ist.

7. Antriebseinheit (1, 1a, 1b) nach Anspruch 5 oder 6, **dadurch gekennzeichnet, dass** die Motorsteuerung (18) einen mit dem Elektromotor (3) elektrisch verbundenen Wechselrichter (27) umfasst, welcher auf der Leiterplatte (25) angeordnet ist.

8. Antriebseinheit (1, 1a, 1b) nach einem der vorhergehenden Ansprüche, **dadurch gekennzeichnet, dass** ein Innenraum (A) des Steuerungsgehäuses (19a, 19b) gegenüber einem Innenraum (B) des Getriebemotorgehäuses (7a, 7b) abgedichtet ist.

9. Antriebseinheit (1, 1a, 1b) nach einem der vorhergehenden Ansprüche, **dadurch gekennzeichnet, dass** das Blockierelement (22a, 22b) aus einem Innenraum (A) des Steuerungsgehäuses (19a, 19b) in einen Innenraum (B) des Getriebemotorgehäuses (7a, 7b) ragt.

10. Antriebseinheit (1, 1a, 1b) nach einem der Ansprüche 1 bis 8, **dadurch gekennzeichnet, dass** das Steuerungsgehäuse (19a, 19b) eine Wölbung nach Innen aufweist und das Blockierelement (22a, 22b) aus einem Innenraum (B) des Getriebemotorgehäuses (7a, 7b) in die Wölbung ragt.

11. Antriebseinheit (1, 1a, 1b) nach einem der vorhergehenden Ansprüche, **dadurch gekennzeichnet, dass** das Steuerungsgehäuse (19a, 19b) aus Metall besteht.

12. Fahrzeug (32) mit einer Antriebseinheit (1, 1a, 1b) nach einem der vorhergehenden Ansprüche, die zum Antreiben des Fahrzeugs (32) vorgesehen ist.

13. Fahrzeug (32) nach Anspruch 12, bei dem die Blockiereinrichtung (20a, 20b) Teil einer Parksperre ist.
